(19) Europäisches Patentamt
European Patent Office
Office européen des brevets

(11) **EP 2 037 017 A2**

(12) **EUROPÄISCHE PATENTANMELDUNG**

(43) Veröffentlichungstag:
**18.03.2009 Patentblatt 2009/12**

(51) Int Cl.:
*D01H 13/26* (2006.01)     *D01H 13/32* (2006.01)

(21) Anmeldenummer: 08014035.3

(22) Anmeldetag: **06.08.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **12.09.2007   DE 102007043354**

(27) Früher eingereichte Anmeldung:
**12.09.2007 DE 102007043354**

(71) Anmelder: **Oerlikon Textile GmbH & Co. KG**
**42897 Remscheid (DE)**

(72) Erfinder:
• **Birlem, Olav**
  **41812 Erkelenz (DE)**
• **Fingel, Oliver**
  **47608 Geldern (DE)**

(74) Vertreter: **Hamann, Arndt**
**Oerlikon Textile GmbH & Co. KG**
**DS**
**Landgrafenstraße 45**
**41069 Mönchengladbach (DE)**

(54) **Verfahren und Vorrichtung zur optischen Detektion von Verunreinigungen in längsbewegtem Garn**

(57)     Die Erfindung betrifft ein Verfahren und eine Vorrichtung mit einer Steuer- und Auswerteeinrichtung (6) zur optischen Detektion von Verunreinigungen, insbesondere von Fremdfasern, in längsbewegtem Garn (1), wobei Licht einer ersten Lichtstärke in Richtung des Garns emittiert und die Intensität des transmittierten Lichtes gemessen wird, wobei Licht einer zweiten Lichtstärke, die in Abhängigkeit von der Intensität des transmittierten Lichtes bestimmt wird, in Richtung des Garns emittiert wird, wobei zunächst eine Lernphase gestartet wird, in der noch keine Verunreinigungen ausgewertet werden und wobei in dieser Lernphase Licht einer dritten Lichtstärke, die für eine vorbestimmte erste Länge des Garns konstant bleibt, in Richtung des Garns emittiert wird und die Intensität des remittierten Lichtes gemessen wird, ein Mittelwert der Intensitäten des remittierten Lichtes berechnet wird und die zweite Lichtstärke in Abhängigkeit eines den Garndurchmesser repräsentierenden Wertes, so bestimmt wird, dass die Intensität des remittierten Lichtes dem berechneten Mittelwert entspricht.

FIG. 1

EP 2 037 017 A2

**Beschreibung**

Die Erfindung betrifft ein Verfahren zur optischen Detektion von Verunreinigungen, insbesondere von Fremdfasern, in längsbewegtem Garn, wobei Licht einer ersten Lichtstärke in Richtung des Garns emittiert und die Intensität des transmittierten Lichtes gemessen wird, dessen Größe vom momentanen Durchmesser des Garns abhängig ist, wobei Licht einer zweiten Lichtstärke, die in Abhängigkeit von der Intensität des transmittierten Lichtes bestimmt wird, in Richtung des Garns emittiert wird und wobei das remittierte Licht vom Einfluss der Größe des Garndurchmessers befreit ist und unmittelbar der Erkennung von Verunreinigungen dient. Die Erfindung betrifft weiterhin eine Vorrichtung zur optischen Detektion von Verunreinigungen, insbesondere von Fremdfasern, in längsbewegtem Garn mit einer Steuer- und Auswerteeinrichtung und mit einer Lichtquelle zur Emission von Licht einer ersten und zweiten Lichtstärke in Richtung des Garns und einem Sensor zur Messung der Intensität des transmittierten Lichtes, dessen Größe vom momentanen Durchmesser des Garns abhängig ist, wobei die zweite Lichtstärke in mittels der Steuer- und Auswerteeinrichtung in Abhängigkeit von der Intensität des transmittierten Lichtes bestimmbar ist und das remittierte Licht, welches mittels eines Sensors messbar ist, vom Einfluss der Größe des Garndurchmessers befreit ist und von der Steuer- und Auswerteeinrichtung unmittelbar zur Erkennung von Verunreinigungen verwendbar ist.

Vor der Herstellung von Fäden und Garnen aus Baumwolle oder anderen Naturfasern findet zunächst eine mechanische Reinigung der Fasern statt. Dadurch werden grobe Verunreinigungen aus den Fasern entfernt. Anderseits gibt es gewisse Verunreinigungen, wie zum Beispiel Fremdfasern verschiedener Art, die sich auf diese Weise nicht entfernen lassen. Ferner können die Verunreinigungen beziehungsweise Fremdfasern erst im weiteren Verarbeitungsprozess auftreten. Diese werden dann in den Faden oder das Garn eingesponnen und beinträchtigen die nachfolgenden Bearbeitungsprozesse sowie die Qualität des Endproduktes.

Es sind so genannte Garnreiniger bekannt, mit denen sowohl Garnunregelmäßigkeiten, wie Dick- oder Dünnstellen und dergleichen, als auch Verunreinigungen erkannt werden können. Garnreiniger finden dabei sowohl in Spinn- als auch in Spulmaschinen Anwendung. Nach Erkennen eines Fehlers kann bei einer Spinnmaschine zur Beseitigung desselben der Spinnprozess unterbrochen werden und ein Wiederanspinnen des Fadens erfolgen. Wird ein Garnfehler bei einer Spulmaschine erkannt, wird die Fehlerstelle herausgeschnitten und die Fadenenden werden durch Spleißen wieder miteinander verbunden.

Die gattungsbildende DE 100 09 131 A1 offenbart ein Verfahren und eine Vorrichtung zur optischen Detektion von Verunreinigungen. Dabei wird gleichzeitig die Detektion von Dick- und Dünnstellen ermöglicht. Dick- und Dünnstellen oder anders gesagt Änderungen des Garndurchmessers können durch Emission von Licht in Richtung des Garns und Messung des vom Garn transmittierten Lichtes ermittelt werden. Die Intensität des transmittierten Lichtes ermöglicht dabei eine direkte Aussage über den Garndurchmesser. Zur Erkennung von Verunreinigungen wird das vom Garn remittierte Licht ausgewertet. Dabei ist zu beachten, dass nicht nur Verunreinigungen eine Veränderung im Remissionswert bewirken sondern auch eine Änderung des Durchmessers. Bei einer Vergrößerung des Durchmessers erhöht sich der Remissionswert und umgekehrt führt ein kleinerer Durchmesser auch zu einem kleineren Remissionswert. Um den Einfluss des Durchmessers auf das Remissionssignal zu kompensieren wird in der DE 100 09 131 A1 vorgeschlagen, dass bei einer ersten Messung die Intensität des transmittierten Lichtes und damit der Durchmesser des Garns bestimmt wird und in einer zweiten Messung die Intensität des in Richtung des Garns emittierten Lichtes in Abhängigkeit vom Garndurchmesser so eingestellt wird, dass das Remissionssignal vom Einfluss des Durchmessers befreit ist. Die zitierte Schrift offenbart jedoch keine Möglichkeit wie die Lichtstärke aus dem Durchmesser- beziehungsweise dem Transmissionssignal einfach und systematisch bestimmt werden kann.

Es ist daher die Aufgabe der vorliegenden Erfindung, eine solche Möglichkeit bereitzustellen.

Die Aufgabe wird erfindungsgemäß durch die kennzeichnenden Merkmale des Verfahrensanspruches 1 sowie des Vorrichtungsanspruches 22 gelöst. Vorteilhafte Weiterbildungen der Erfindung sind Gegenstand der Unteransprüche.

Zur Lösung der Aufgabe wird vorgeschlagen, zunächst eine Lernphase zu starten, in der noch keine Verunreinigungen ausgewertet werden, und in dieser Lernphase wird Licht einer dritten Lichtstärke, die für eine vorbestimmte erste Länge des Garns konstant bleibt, in Richtung des Garns emittiert, die Intensität des remittierten Lichtes gemessen, ein Mittelwert der Intensitäten des remittierten Lichtes berechnet und die zweite Lichtstärke in Abhängigkeit von einem den Garndurchmesser repräsentierenden Wert, so bestimmt, dass die Intensität des remittierten Lichtes dem berechneten Mittelwert entspricht.

Damit wird vor dem normalen Betrieb, das heißt vor dem Start der Detektion von Verunreinigungen, eine Zuordnung festgelegt, die während des normalen Betriebes die Ermittlung der zu einem bestimmten Durchmesser gehörenden zweiten Lichtstärke einfach und schnell ermöglicht.

Gemäß einer bevorzugten Ausführungsform wird in einer Tabelle einem den Durchmesser des Garns repräsentierenden Wert die zweite Lichtstärke zugeordnet. Der den Garndurchmesser repräsentierende Wert kann der Durchmesser selber sein, ein proportionaler Zahlenwert oder die Intensität des transmittierten Lichtes beziehungsweise der Abschattungswert. Bei direkter Verwendung der Intensität des transmittierten Lichtes muss die erste Lichtstärke, mit der die Transmissionsmessung durchgeführt wird, für alle Messungen konstant bleiben.

Zur Initialisierung der Tabelle kann jedem den Durchmesser des Garns repräsentierenden Wert zunächst die dritte Lichtstärke als zweite Lichtstärke zugeordnet werden. Dann kann für eine vorbestimmte zweite Länge des Garns im Anschluss an die erste, entsprechend der initialisierten Tabelle, Licht mit der zweiten durchmesserabhängigen Lichtstärke in Richtung des Garns emittiert werden. Die in die Tabelle eingetragene zweite Lichtstärke kann dann in Abhängigkeit von der Abweichung der Intensität des remittierten Lichtes vom auf der ersten Länge des Garns bestimmten Mittelwert angepasst werden.

In einer Weiterbildung der Erfindung wird die in die Tabelle eingetragene zweite Lichtstärke um einen vorbestimmten Betrag erhöht, wenn die Intensität des remittierten Lichtes kleiner ist als der auf der ersten Länge des Garns bestimmte Mittelwert und die in die Tabelle eingetragene zweite Lichtstärke wird um einen vorbestimmten Betrag reduziert, wenn die Intensität des remittierten Lichtes größer ist als der auf der ersten Länge des Garns bestimmte Mittelwert. Dadurch werden die in der Tabelle eingetragenen Werte sukzessiv verbessert.

Vorteilhafterweise wird nach dem Ende der zweiten Länge die in der Tabelle abgelegte Kurve geglättet. Dadurch werden Ausreißer beziehungsweise die Lichtstärkewerte, die zu wenig vorkommenden Durchmesserwerten gehören, ausgeglichen. Dazu kann die Anzahl der Remissionswerte, aus denen die zweite Lichtstärke für einen bestimmten Garndurchmesser ermittelt wird, erfasst werden und nach dem Ende der zweiten Länge die Glättung unter Berücksichtigung dieser Anzahl erreicht werden.

Vorteilhafterweise wird die zweite Lichtstärke für die während der zweiten Länge des Garns nicht vorkommenden Durchmesser extrapoliert.

Gemäß einer Weiterbildung der Erfindung wird mit dem Start der Detektion von Verunreinigungen für eine vorbestimmte dritte Länge des Garns oder fortlaufend die zweite Lichtstärke in Abhängigkeit von der Abweichung der Intensität des remittierten Lichtes von ihrem Mittelwert angepasst. Dazu kann entsprechend der beschriebenen Vorgehensweise für die zweite Länge des Garn die in die Tabelle eingetragene zweite Lichtstärke um einen vorbestimmten Betrag erhöht werden, wenn die Intensität des remittierten Lichtes kleiner ist als ihr Mittelwert, und die in die Tabelle eingetragene zweite Lichtstärke kann um einen vorbestimmten Betrag reduziert werden, wenn die Intensität des remittierten Lichtes größer ist als ihr Mittelwert. Vorteilhafterweise wird der Betrag, um den die zweite Lichtstärke erhöht oder reduziert wird, kleiner gewählt als der Betrag während der zweiten Länge des Garns, da hier nur noch eine Feinabstimmung und eine weitere Glättung der in der Tabelle abgelegten Kurve erfolgt. Alternativ kann die Änderung, der in der Tabelle abgelegten zweiten Lichtstärke auch nur dann erfolgen, wenn die Abweichung der Intensität des remittierten Lichtes von ihrem Mittelwert einen vorbestimmten Wert überschreitet. Dieser vorbestimmte Wert kann das natürliche Remissionsrauschen des Garn darstellen. Es wird dann erst ein Eingriff in der Tabelle vorgenommen, wenn die Intensität des remittierten Lichtes über oder unter diesem Rauschband liegt. Im Regelfall wird dieser vorbestimmte Wert der Remissionsabweichung größer sein, als die Abweichung, die eine Intensitätsänderung der zweiten Lichtstärke während der zweiten Länge des Garns bewirkt, da es während der zweiten Länge darum geht möglichst viele Werte zu ermitteln, die der Lichtstärkeanpassung zu Grunde liegen. Zusätzlich kann während der dritten Länge des Garns mit jeder Änderung der Intensität der zweiten Lichtstärke eine Mittelung unter Berücksichtigung der Intensitätswerte zu den benachbarten Durchmessern durchgeführt werden.

Gemäß einer weiteren Ausführungsform des erfindungsgemäßen Verfahrens wird während der ersten Länge des Garns zu jeder Intensität des remittierten Lichtes eine zugehörige Intensität des vom Garn transmittierten Lichtes gemessen. Daraus kann eine erste Funktion bestimmt werden, die die Abhängigkeit der Intensität des remittierten Lichtes von einer den Garndurchmesser repräsentierenden Größe während der ersten Länge beschreibt. Dann kann eine zweite Funktion bestimmt werden, die, multipliziert mit der ersten Funktion, den Mittelwert der Intensitäten des remittierten Lichtes ergibt. Die so ermittelte zweite Funktion kann dann zur Berechnung der zweiten durchmesserkorrigierten Lichtstärke verwendet werden.

Unter der Annahme das sich die Remission über die gesamte Garnbreite gleich verhält, ist der Zusammenhang zwischen Durchmesser und Remission linear. Deshalb wird in einer Ausgestaltung der Erfindung als erste Funktion eine lineare Funktion gewählt und die zweite Funktion beschreibt demzufolge eine 1/x-Kurve.

Die oben getroffene Annahme ist jedoch nur näherungsweise erfüllt, da sich das Remissionsverhalten des Garns von der Mitte zum Rand hin verändert. Deshalb kommen auch andere Funktionen in Frage. Da nicht immer alle Kurvenverläufe geschlossen darstellbar sind, werden in einer weiteren Ausführungsform für die erste und zweite Funktion abschnittsweise definierte Funktionen verwendet.

In einer vorteilhaften Weiterbildung wird während einer zweiten Länge des Garns Licht der zweiten Lichtstärke in Richtung des Garns emittiert und das vom Garn remittierte Licht in Abhängigkeit vom Garndurchmesser erfasst und die zu einem Garndurchmesser gehörenden Remissionswerte gemittelt. Die Mittelung kann dabei durch ein Exponentialfilter erfolgen, das gleichzeitig eine Glättung der Kurve bewirkt. Aus dem garndurchmesserbezogenen Remissionsmittelwert und dem Mittelwert über alle Remissionswerte kann dann zu jedem Garndurchmesser ein Korrekturwert ermittelt werden.

Vorteilhafterweise wird ein den Garndurchmesser repräsentierender Wert und der zugehörige Korrekturfaktor in einer Tabelle abgelegt. Gegebenenfalls kann die in der Tabelle abgelegte Kurve noch geglättet werden.

Zur Detektion von Verunreinigungen kann die gemessene Intensität des remittierten Lichtes vor der weiteren Auswertung mit dem Korrekturfaktor multipliziert werden. Da jede Funktion den Verlauf des Remissionswertes in Abhängigkeit vom Durchmesser nur mit begrenzter Genauigkeit wiedergeben kann, können diese Abweichungen durch die nachträgliche Korrektur des gemessenen Remissionswertes ausgeglichen werden.

Zur Lösung der Aufgabe wird weiterhin eine Vorrichtung zur optischen Detektion von Verunreinigungen mit einer Steuer- und Auswerteeinrichtung vorgeschlagen, wobei die Lichtquelle dazu ausgebildet ist in einer Lernphase, in der noch keine Verunreinigungen ausgewertet werden, Licht einer dritten Lichtstärke, die für eine vorbestimmte erste Länge des Garns konstant bleibt, in Richtung des Garns zu emittieren und die Intensität des remittierten Lichtes mittels des Sensors messbar ist, die Steuer- und Auswerteeinrichtung dazu ausgebildet ist einen Mittelwert der Intensitäten des remittierten Lichtes zu berechnen und die zweite Lichtstärke in Abhängigkeit von einem den Garndurchmesser repräsentierenden Wert, so zu bestimmen, dass die Intensität des remittierten Lichtes dem berechneten Mittelwert entspricht.

Gemäß einer vorteilhaften Ausführungsform der erfindungsgemäßen Vorrichtung entspricht die erste Lichtstärke der maximalen Lichtstärke der Lichtquelle, um ein möglichst großes Transmissionssignal zu erhalten.

Vorteilhafterweise entspricht die dritte Lichtstärke einer mittleren Lichtstärke der Lichtquelle, das heißt, die Lichtstärke wird gegenüber der maximalen Lichtstärke herabgesetzt. Dadurch kann während der weiteren Lernphase das Signal nach oben und unten angepasst werden.

Gemäß weiterer Ausführungsformen ist die erfindungsgemäße Vorrichtung dazu ausgebildet die verschiedenen Ausführungsformen und Weiterbildungen des erfindungsgemäßen Verfahrens durchzuführen.

Die Erfindung wird nachfolgend anhand von zwei in den Zeichnungen dargestellten Ausführungsbeispielen näher erläutert. Das erste Ausführungsbeispiel bezieht sich dabei auf die Ermittlung einer Tabelle, die jedem Durchmesser die zweite Lichtstärke zuordnet. Das zweite Ausführungsbeispiel stellt die Ermittlung einer entsprechenden Funktion dar.

Es zeigen:

Fig. 1    eine erfindungsgemäße Vorrichtung;

Fig. 2    die Lichtintensität der Lichtquelle für den zweiten Lichtblitz in Anhängigkeit von der Intensität des transmittierten Licht bis zum Ende der ersten Länge des Garns;

Fig. 3    die Lichtintensität der Lichtquelle für den zweiten Lichtblitz in Anhängigkeit von der Intensität des transmittierten Licht wie sie am Ende der zweiten Länge des Garns in der Tabelle eingetragen ist;

Fig. 4    die Lichtintensität der Lichtquelle für den zweiten Lichtblitz in Anhängigkeit von der Intensität des transmittierten Licht wie sie nach Glättung in der Tabelle eingetragen ist;

Fig. 5    die Lichtintensität der Lichtquelle für den zweiten Lichtblitz in Anhängigkeit von der Intensität des transmittierten Licht wie sie nach Extrapolation in der Tabelle eingetragen ist;

Fig. 6    die Lichtintensität der Lichtquelle für den zweiten Lichtblitz in Anhängigkeit von der Intensität des transmittierten Licht wie sie am Ende einer dritten Länge des Garns in der Tabelle eingetragen ist;

Fig. 7    die Intensität des remittierten Lichtes in Abhängigkeit von der Intensität des transmittierten Lichtes für einen konstanten Lichtblitz;

Fig. 8    eine grafische Darstellung der Funktion, die die Lichtintensität der Lichtquelle für den zweiten Lichtblitz in Abhängigkeit von der Intensität des transmittierten Lichtes beschreibt.

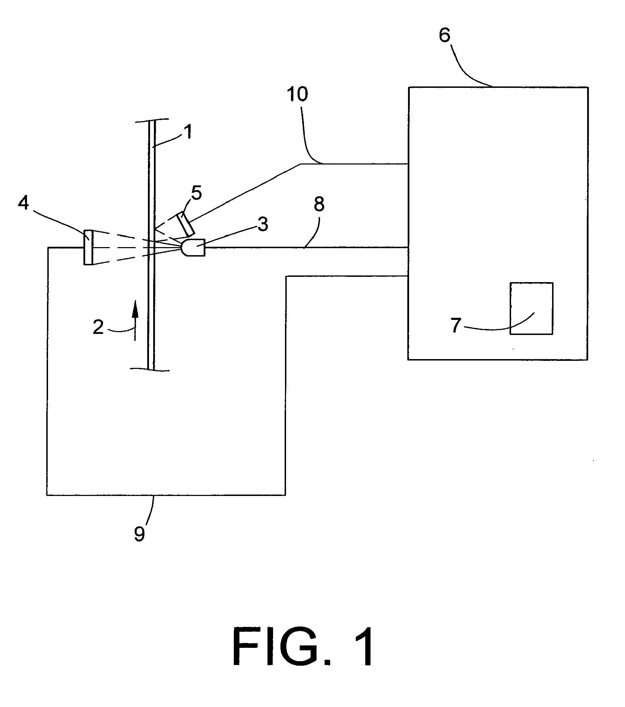

Fig. 1 zeigt eine mögliche Ausführungsform einer erfindungsgemäßen Vorrichtung. Das Garn 1 bewegt sich längs in Richtung des Pfeils 2. Die Lichtquelle 3, hier eine Leuchtdiode, emittiert Licht in Richtung des Garns 1. Das emittierte Licht wird vom Garn sowohl transmittiert als auch remittiert. Zur Messung der Intensitäten des transmittierten und des remittierten Lichtes weist die Vorrichtung zwei Sensoren 4 und 5 auf. Als Sensoren werden im dargestellten Ausführungsbeispiel Photodioden verwendet. Die Photodiode 4 misst dabei das vom Garn transmittierte Licht beziehungsweise die Abschattung. Die Photodiode 5 erfasst das vom Garn remittierte Licht. Die Vorrichtung beinhaltet ferner eine Steuer- und Auswerteeinrichtung 6 mit einem Speicher 7. In dem Speicher 7 ist je nach Ausführungsform der Erfindung entweder die Tabelle mit den Durchmesserwerten und den zugehörigen Lichtwerten für den zweiten Lichtblitz oder die Parameter der entsprechenden Funktion und gegebenenfalls die Tabelle mit den Korrekturwerten für das Remissionssignal abgelegt sein. Die Steuer- und Auswerteeinrichtung ist zur Einstellung der Lichtstärke über die Leitung 8 mit der Leuchtdiode verbunden. Die Messsignale werden von den Photodioden 4 und 5 über die Leitungen 9 und 10 an die Steuer- und Auswerteeinrichtung 6 übertragen. Fig. 1 zeigt nur eine Möglichkeit der Anordnung von Lichtquellen und Sensoren für eine erfindungsgemäße Vorrichtung. Weitere mögliche Anordnungen sind in der DE 100 09 131 A1 offenbart. Danach können auch zwei Lichtquellen und zwei Sensoren oder zwei Lichtquellen und ein Sensor verwendet werden.

Zur Detektion von Verunreinigungen wird nun Licht einer ersten Lichtstärke mittels der Leuchtdiode 3 in Richtung des Garns emittiert und mittels der Photodiode 4 das vom Garn transmittierte Licht gemessen. In einen zweiten Schritt wird ein zweiter Lichtblitz in Richtung des Garns ausgesandt. Die Intensität des zweiten Lichtblitzes ist von der zuvor gemessen Intensität des transmittierten Lichtes und damit vom Durchmesser des Garns abhängig. Das von der Photodiode 5 gemessene Remissionssignal ist dann nicht mehr vom Durchmesser abhängig.

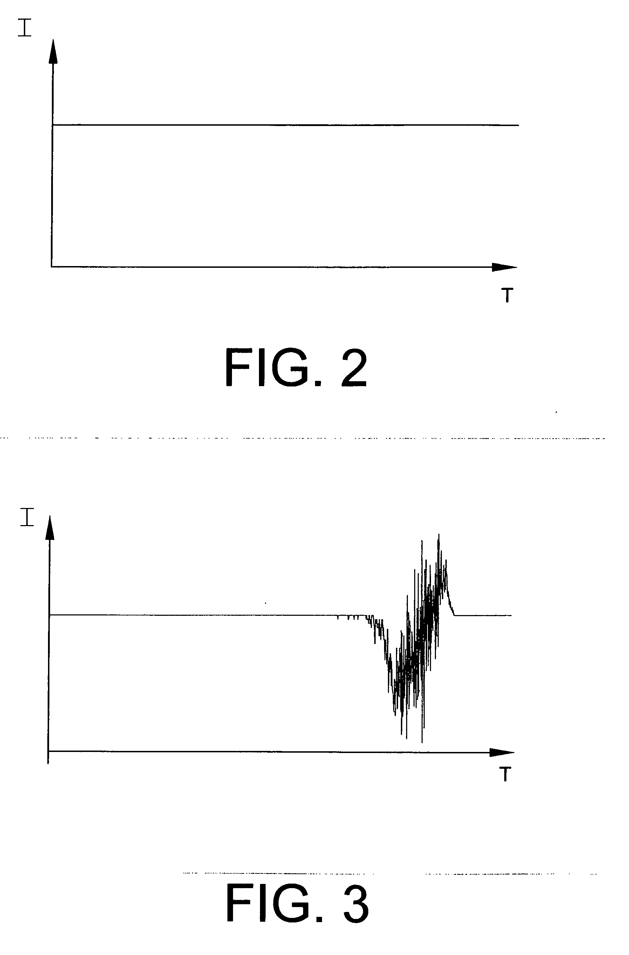

In einem ersten Ausführungsbeispiel wird die Zuordnung der Lichtstärke des zweiten Lichtblitzes I zu dem zuvor gemessenen durchmesserabhängigen Transmissionssignal T in einer Tabelle abgelegt. Die Figuren 2 bis 6 stellen den Inhalt der Tabelle während des Verlaufs einer Lernphase grafisch dar. In einer ersten Phase wird über eine bestimmte erste Länge des Garns Licht einer konstanten Intensität in Richtung des Garns emittiert. Als Intensität wird dabei ein mittlerer mit der Leuchtdiode 3 möglicher Wert gewählt, damit die Intensität während der weiteren Lernphase nach oben und unten angepasst werden kann. Mit dem konstanten mittleren Wert wird die Tabelle initialisiert und jedem aufgrund des ersten Lichtblitzes gemessenen Transmissionswert dieser Wert zugeordnet. Dieser Zustand der Tabelle ist in Fig. 2 grafisch dargestellt. Weiterhin wird unabhängig vom Durchmesser beziehungsweise vom Transmissionswert der Mittelwert der in der ersten Phase gemessenen Remissionswerte berechnet.

In einer zweiten Phase wird über eine zweite Länge des Garns in Abhängigkeit von dem gemessenen Transmissionssignal für den zweiten Lichtblitz die in der Tabelle eingetragene Lichtstärke einstellt und das gemessene Remissionssignal mit dem zuvor bestimmten Remissionsmittelwert verglichen. Wenn das Remissionssignal kleiner ist als der Mittelwert, wird das zu diesem Transmissionswert in der Tabelle eingetragene Lichtintensität für den zweiten Lichtblitz erhöht. Umgekehrt wird die in die Tabelle eingetragene Intensität reduziert, wenn der gemessene Remissionswert größer ist als der Mittelwert. Die Tabelleneinträge nach dieser zweiten Phase sind in Fig. 3 grafisch dargestellt.

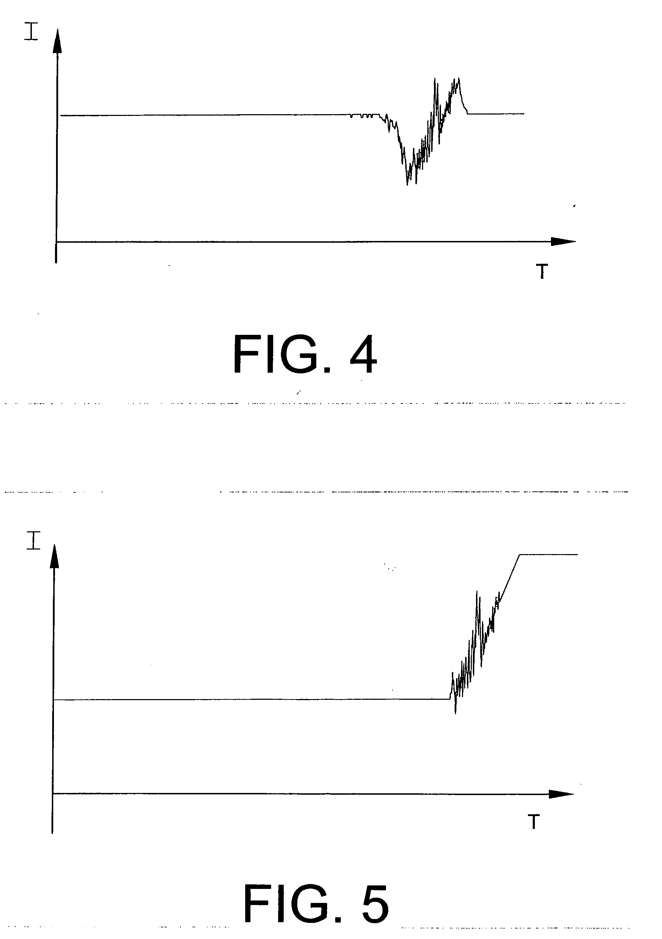

Fig. 4 zeigt den Verlauf nach Glättung der Kurve und Fig. 5 den Verlauf nach Extrapolation für die nicht vorkommenden Durchmesser beziehungsweise Transmissionswerte.

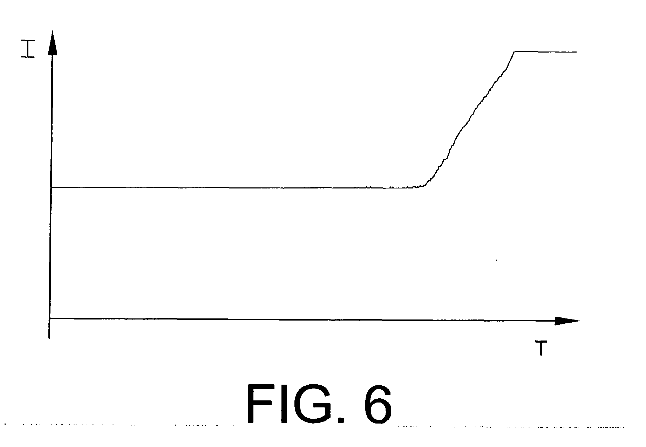

Mit den Tabelleneinträgen gemäß Fig. 5 kann dann mit der Detektion von Verunreinigungen begonnen werden. Dabei kann dann noch ein dritte Lernphase erfolgen, die entweder für eine bestimmte Garnlänge oder kontinuierlich erfolgt. Fig. 6 zeigt das Ergebnis der Lernphase nach einer bestimmten Garnlänge. Während der dritten Länge des Garns werden ähnlich der zweiten Phase die Remissionswerte mit dem Remissionsmittelwert verglichen und die Intensitäten des zweiten Lichtblitzes nach oben oder unten angepasst. Die Beträge, um die die Lichtintensität verändert wird, sind jedoch deutlich kleiner als in der zweiten Phase.

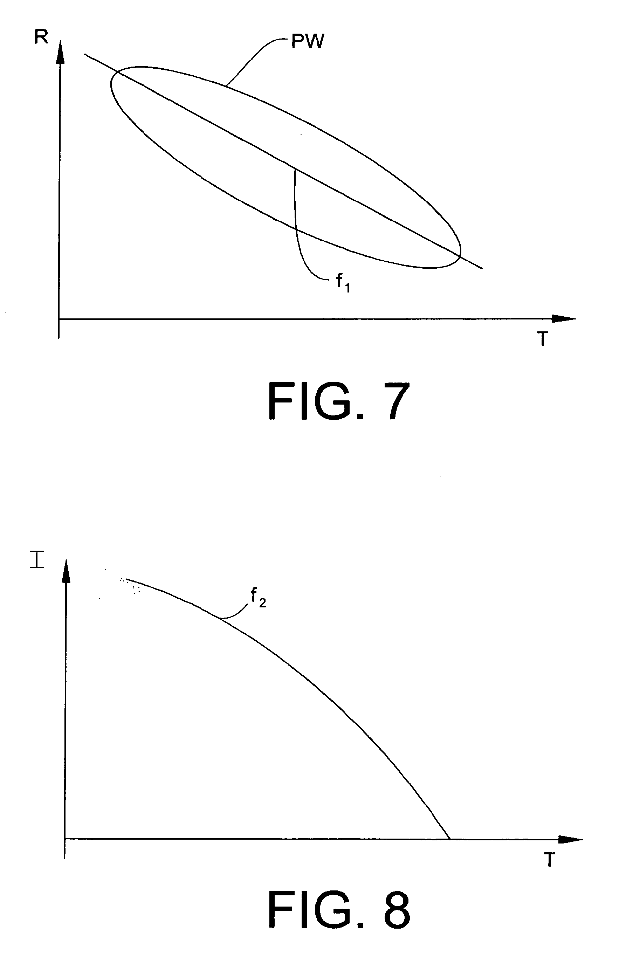

Die Figuren 7 und 8 veranschaulichen ein zweites Ausführungsbeispiel, bei dem für die Ermittlung der Intensität des zweiten Lichtblitzes in Abhängigkeit vom Garndurchmesser beziehungsweise vom Transmissionssignal eine Funktion bestimmt wird. Entsprechend des ersten Ausführungsbeispiels wird für eine bestimmte Garnlänge das Remissionssignal bei einem konstanten Lichtblitz ausgewertet und der Mittelwert über alle Durchmesser gebildet. Zu jedem Durchmesser beziehungsweise Transmissionswert T werden während dieser ersten Länge eine Vielzahl von Remissionswerten R gemessen. Daraus ergibt sich eine in Fig. 7 dargestellte Punktewolke PW. Hier wird durch lineare Regression die Funktion $f_1$ ermittelt, die die Abhängigkeit des Remissionswertes vom Tansmissionswert beschreibt. Die Funktion lässt sich durch Gleichung (1) beschreiben.

$$R = f_1(T) = C_1 \cdot T + C_2 \qquad\qquad (1)$$

$C_1$ und $C_2$ sind dabei konstante Parameter, die aus den Remissionsmesswerten bestimmt werden können. Um die Durchmesserabhängigkeit im Remissionssignal zu kompensieren, muss die Gerade mit der Steigung $C_1$ in eine Gerade parallel zur Abszisse überführt werden. Dazu wird eine Funktion $f_2$ in Abhängigkeit der Durchmessers D beziehungsweise des Transmissionssignals T derart bestimmt, dass sich bei Multiplikation der Funktionen $f_1$ und $f_2$ gerade der Remissionsmittelwert $R_m$ ergibt.

$$R_m = f_1(T) \cdot f_2(T) \qquad (2)$$

Da die Funktion $f_1$ eine lineare Funktion ist, beschreibt die Funktion $f_2$ eine 1/x-Kurve.

$$f_2(D) = \frac{C_3}{D} \qquad (3)$$

Die Gleichung (4) beschreibt den Zusammenhang zwischen dem Garndurchmesser D und dem Transmissionssignal T, wobei $C_4$ eine für die jeweilige Messanordnung bekannte Konstante ist.

$$D = C_4 - T \qquad (4)$$

Aus Gleichung (3) und (4) ergibt sich die Funktion $f_2$ in Abhängigkeit vom Transmissionssignal.

$$f_2(T) = \frac{C_3}{C_4 - T} \qquad (5)$$

Aus Gleichung (2) in Verbindung mit den Gleichungen (1) und (5), lässt sich dann der Korrekturfaktor $C_3$ berechnen. Die Funktion $f_2$ ist damit eindeutig definiert.

Die Funktion $f_2$ ist in Fig. 8 grafisch dargestellt und kann nach Bestimmung für die Einstellung der Intensität des zweiten Lichtblitzes verwendet werden. Die Detektion von Verunreinigungen ist damit aktiv.

Bei Verwendung einer Funktion zur Einstellung des zweiten Lichtblitzes kann das gemessene Remissionssignal noch mit einem durchmesserabhängigen Korrekturwert multipliziert werden. Die Zuordnung Durchmesser zu Korrekturwert ist dabei in einer Tabelle abgelegt. Zur Ermittlung der Korrekturwerte wird zur Messung der Remissionswerte Licht entsprechend der ermittelten Funktion in Richtung des Garns emittiert. Dabei werden zu jedem Durchmesser die Mittelwerte des Remissionssignals bestimmt. Der Korrekturfaktor ergibt sich aus der Abweichung dieses Mittelwertes vom Remissionsmittelwert über alle Durchmesser.

Denkbar ist noch eine dritte Variante, die beide erläuterten Ausführungsformen miteinander verbindet. Dabei wird entsprechend der ersten Ausführungsform eine Tabelle ermittelt, die jedem Durchmesserwert die Intensität des zweiten Lichtblitzes zuordnet. Im Unterschied dazu wird jedoch die in die Tabelle zweite Lichtstärke nicht mit der dritten Lichtstärke initialisiert, die während der ersten Länge des Garn zur Bestimmung des Remissionsmittelwertes verwendet wird, sondern mittels einer Funktion, die entsprechend der zweiten Ausführungsform, dem Durchmesser oder Transmissionswert die zweite Lichtstärke zuordnet. Ansonsten können die Abläufe zur Bestimmung der Tabelle beibehalten werden. Das hat den Vorteil, dass sich die Garnlänge, die zur Ermittlung der Tabelle benötigt wird, verringert.

**Patentansprüche**

1. Verfahren zur optischen Detektion von Verunreinigungen, insbesondere von Fremdfasern, in längsbewegtem Garn (1), wobei Licht einer ersten Lichtstärke in Richtung des Garns emittiert und die Intensität des transmittierten Lichtes gemessen wird, dessen Größe vom momentanen Durchmesser des Garns abhängig ist, wobei Licht einer zweiten Lichtstärke, die in Abhängigkeit von der Intensität des transmittierten Lichtes bestimmt wird, in Richtung des Garns emittiert wird, wodurch dann das remittierte Licht vom Einfluss der Größe des Garndurchmessers befreit ist und unmittelbar der Erkennung von Verunreinigungen dient, **dadurch gekennzeichnet, dass** zunächst eine Lernphase gestartet wird, in der noch keine Verunreinigungen ausgewertet werden, dass in dieser Lernphase Licht einer dritten Lichtstärke, die für eine vorbestimmte erste Länge des Garns konstant bleibt, in Richtung des Garns emittiert wird und die Intensität des remittierten Lichtes gemessen wird, dass ein Mittelwert der Intensitäten des remittierten Lichtes berechnet wird und dass die zweite Lichtstärke in Abhängigkeit von einem den Garndurchmesser repräsentierenden Wert so bestimmt wird, dass die Intensität des remittierten Lichtes dem berechneten Mittelwert entspricht.

2. Verfahren nach Anspruch 1, **dadurch gekennzeichnet, dass** in einer Tabelle einem den Durchmesser des Garns repräsentierenden Wert die zweite Lichtstärke zugeordnet wird.

3. Verfahren nach Anspruch 2, **dadurch gekennzeichnet, dass** zur Initialisierung der Tabelle jedem den Durchmesser des Garns repräsentierenden Wert die dritte Lichtstärke als zweite Lichtstärke zugeordnet wird.

4. Verfahren nach Anspruch 3, **dadurch gekennzeichnet, dass** für eine vorbestimmte zweite Länge des Garns im Anschluss an die erste, entsprechend der Tabelle, Licht mit der zweiten Lichtstärke in Richtung des Garns emittiert wird und dass die in die Tabelle eingetragene zweite Lichtstärke in Abhängigkeit von der Abweichung der Intensität des remittierten Lichtes vom auf der ersten Länge des Garns bestimmten Mittelwert angepasst wird.

5. Verfahren nach Anspruch 4, **dadurch gekennzeichnet, dass** die in die Tabelle eingetragene zweite Lichtstärke um einen vorbestimmten Betrag erhöht wird, wenn die Intensität des remittierten Lichtes kleiner ist als der auf der ersten Länge des Garns bestimmte Mittelwert und dass die in die Tabelle eingetragene zweite Lichtstärke um einen vorbestimmten Betrag reduziert wird, wenn die Intensität des remittierten Lichtes größer ist als der auf der ersten Länge des Garns bestimmte Mittelwert.

6. Verfahren nach Anspruch 5, **dadurch gekennzeichnet, dass** nach dem Ende der zweiten Länge die in der Tabelle abgelegte Kurve geglättet wird.

7. Verfahren nach Anspruch 6, **dadurch gekennzeichnet, dass** während der zweiten Länge des Garns die Anzahl der Remissionswerte, aus denen die zweite Lichtstärke für einen bestimmten Garndurchmesser ermittelt wird, erfasst wird und dass nach dem Ende der zweiten Länge die Glättung unter Berücksichtigung dieser Anzahl durchgeführt wird.

8. Verfahren nach Anspruch 7, **dadurch gekennzeichnet, dass** die zweite Lichtstärke für die während der zweiten Länge des Garns nicht vorkommenden Durchmesser extrapoliert wird.

9. Verfahren nach Anspruch 8, **dadurch gekennzeichnet, dass** mit dem Start der Detektion von Verunreinigungen für eine vorbestimmte dritte Länge des Garns oder fortlaufend die zweite Lichtstärke in Abhängigkeit von der Abweichung der Intensität des remittierten Lichtes von ihrem Mittelwert angepasst wird.

10. Verfahren nach Anspruch 1, **dadurch gekennzeichnet, dass** während der ersten Länge des Garns zu jeder Intensität des remittierten Lichtes eine zugehörige Intensität des vom Garn transmittierten Lichtes gemessen wird.

11. Verfahren nach Anspruch 10, **dadurch gekennzeichnet, dass** eine erste Funktion bestimmt wird, die die Abhängigkeit der Intensität des remittierten Lichtes von einer den Garndurchmesser repräsentierenden Größe während der ersten Länge beschreibt.

12. Verfahren nach Anspruch 11, **dadurch gekennzeichnet, dass** eine zweite Funktion bestimmt wird, die multipliziert mit der ersten Funktion den Mittelwert der Intensitäten des remittierten Lichtes ergibt.

13. Verfahren nach Anspruch 12, **dadurch gekennzeichnet, dass** die zweite Lichtstärke mittels der zweiten Funktion berechnet wird.

14. Verfahren nach Anspruch 13, **dadurch gekennzeichnet, dass** die erste Funktion eine lineare Funktion ist und die zweite Funktion eine 1/x-Kurve beschreibt.

15. Verfahren nach Anspruch 13, **dadurch gekennzeichnet, dass** die erste und zweite Funktion abschnittsweise definierte Funktionen sind.

16. Verfahren nach Anspruch 13, **dadurch gekennzeichnet, dass** während einer zweiten Länge des Garns Licht der zweiten Lichtstärke in Richtung des Garns emittiert und dass vom Garn remittierte Licht in Abhängigkeit vom Garndurchmesser erfasst wird und dass die zu einem Garndurchmesser gehörenden Remissionswerte gemittelt werden.

**17.** Verfahren nach Anspruch 16, **dadurch gekennzeichnet, dass** die Mittelung durch ein Exponentialfilter erfolgt.

**18.** Verfahren nach einem der Ansprüche 16 oder 17, **dadurch gekennzeichnet, dass** aus dem garndurchmesserbezogenen Remissionsmittelwert und dem Mittelwert über alle Remissionswerte zu jedem Garndurchmesser ein Korrekturwert ermittelt wird.

**19.** Verfahren nach Anspruch 18, **dadurch gekennzeichnet, dass** ein den Garnmesser repräsentierender Wert und der zugehörige Korrekturfaktor in einer Tabelle abgelegt wird.

**20.** Verfahren nach Anspruch 19, **dadurch gekennzeichnet, dass** die in der Tabelle abgelegte Kurve geglättet wird.

**21.** Verfahren nach einem der Ansprüche 18 bis 20, **dadurch gekennzeichnet, dass** zur Detektion von Verunreinigungen die gemessene Intensität des remittierten Lichtes vor der weiteren Auswertung mit dem Korrekturfaktor multipliziert wird.

**22.** Vorrichtung zur Durchführung des Verfahrens nach einem der Ansprüche 1 bis 21 mit einer Steuer- und Auswerteeinrichtung (6), mit einer Lichtquelle (3) zur Emission von Licht einer ersten und zweiten Lichtstärke in Richtung des Garns und einem Sensor (4) zur Messung der Intensität des transmittierten Lichtes, dessen Größe vom momentanen Durchmesser des Garns abhängig ist, wobei die zweite Lichtstärke mittels der Steuer- und Auswerteeinrichtung in Abhängigkeit von der Intensität des transmittierten Lichtes bestimmbar ist und das remittierte Licht, welches mittels eines Sensors (5) messbar ist, vom Einfluss der Größe des Garndurchmessers befreit ist und von der Steuer- und Auswerteeinrichtung unmittelbar zur Erkennung von Verunreinigungen verwendbar ist, **dadurch gekennzeichnet, dass** die Lichtquelle (3) dazu ausgebildet ist in einer Lernphase, in der noch keine Verunreinigungen ausgewertet werden, Licht einer dritten Lichtstärke, die für eine vorbestimmte erste Länge des Garns konstant bleibt, in Richtung des Garns zu emittieren, dass die Steuer- und Auswerteeinrichtung (6) dazu ausgebildet ist, einen Mittelwert der Intensitäten des remittierten Lichtes zu berechnen und die zweite Lichtstärke in Abhängigkeit von einem den Garndurchmesser repräsentierenden Wert, so zu bestimmen, dass die Intensität des remittierten Lichtes dem berechneten Mittelwert entspricht.

**23.** Vorrichtung nach Anspruch 22, **dadurch gekennzeichnet, dass** die erste Lichtstärke der maximalen Lichtstärke der Lichtquelle (3) entspricht.

**24.** Vorrichtung nach Anspruch 22 oder 23, **dadurch gekennzeichnet, dass** die dritte Lichtstärke einer mittleren Lichtstärke der Lichtquelle (3) entspricht.

# FIG. 1

# FIG. 2

# FIG. 3

# FIG. 4

# FIG. 5

FIG. 6

FIG. 7

FIG. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10009131 A1